# EUROPÄISCHE PATENTANMELDUNG

(11) **EP 2 325 611 A2**
(43) Veröffentlichungstag der Anmeldung: **25.05.2011**
(21) Anmeldenummer: 10167813.4
(22) Anmeldetag: 30.06.2010
(51) Int. Cl.: G01D 7/04

(54) **Darstellung von Betriebsgrößen einer Maschine**

(30) Priorität: 21.09.2009 DE 102009042097
(71) Anmelder: CLAAS Selbstfahrende Erntemaschinen GmbH, 33428 Harsewinkel (DE)
(72) Erfinder: Brune, Markus, 33428, Marienfeld (DE)

(57) **Zusammenfassung**

Eine Anzeigevorrichtung zum Anzeigen von Betriebsgrößen einer Maschine, insbesondere einer landwirtschaftlichen Arbeitsmaschine, hat eine Mehrzahl von zueinander benachbarten Anzeigeskalen (34-38; 41-45; 47-51), an denen jeweils ein Zeiger (33) zum Visualisieren jeweils einer der Betriebsgrößen bewegbar ist. Die Anzeigeskalen (34-38; 41-45; 47-51) sind eingerichtet, relativ zueinander derart bewegt zu werden, dass ihre Zeiger (33), wenn sie Zielwerte der Betriebsgrößen visualisieren, auf einer Linie (39) liegen.

## Beschreibung

Die vorliegende Erfindung betrifft eine Vorrichtung und ein Verfahren zum Darstellen eines Satzes von Betriebsgrößen einer Maschine, insbesondere einer landwirtschaftlichen Arbeitsmaschine wie etwa eines Mähdreschers.

Bei der Steuerung einer Maschine in Echtzeit muss eine Bedienungsperson eine Vielzahl von Betriebsgrößen überwachen und gegebenenfalls korrigieren, um die Maschine auf einem geeigneten Arbeitspunkt zu halten. Es ist schwierig, die hierfür erforderliche Konzentration über einen langen Zeitraum gleichmäßig aufzubringen, so dass die Wirtschaftlichkeit des Betriebs der Maschine im Laufe der Zeit schwankt.

Auch eine ideal aufmerksame Bedienungsperson kann den Betrieb der Maschine bestenfalls nur so genau steuern, wie sie die Ist-Werte der relevanten Betriebsgrößen wahrnehmen kann bzw. von entsprechenden Anzeigeinstrumenten angezeigt bekommt.

Ein Anzeigeinstrument sollte einerseits möglichst jeden Wert anzeigen können, den eine ihm zugeordnete Betriebsgröße im Laufe der Zeit annehmen kann; andererseits kann ein zulässiger Wertebereich der Betriebsgröße nur ein kleiner Bruchteil des gesamten möglichen Werteintervalls dieser Betriebsgröße sein, so dass es für einen Benutzer schwierig ist, auf einer das gesamten mögliche Werteintervall einer Betriebsgröße abdeckenden Skala abzulesen, ob ein Ist-Wert der Betriebsgröße im zulässigen Wertebereich liegt oder nicht, und in welcher Richtung er sich gegebenenfalls entwickelt.

Um die Richtung einer Entwicklung beurteilen zu können, muss sich die Bedienungsperson entweder die Werte der Betriebsgrößen zu einem gegebenen Vergleichszeitpunkt merken, um sie mit den Ist-Werten zum gegenwärtigen Zeitpunkt zu vergleichen, oder es müssen ihr Ist-Werte und Vergleichswerte der Betriebsgrößen gleichzeitig angezeigt werden, was eine großflächige und unübersichtliche Anzeigevorrichtung erforderlich macht.

Die obigen Probleme stellen sich besonders akut bei einer selbstfahrenden, insbesondere landwirtschaftlichen Arbeitsmaschine, bei der der Bedienungsperson nicht nur die Steuerung von Arbeitsaggregaten der Maschine, sondern auch deren Lenkung obliegt.

Es besteht daher Bedarf nach einer Vorrichtung und einem Verfahren zum Anzeigen eines Satzes von Betriebsgrößen einer solchen Maschine, die einer Bedienungsperson eine präzise Ablesung sowie eine einfache und sichere Erkennung der Änderungstendenz von Betriebsgrößen der Maschine ermöglichen.

Die Aufgabe wird zum einen gelöst, indem bei einer Anzeigevorrichtung zum Anzeigen von Betriebsgrößen einer Maschine, insbesondere einer landwirtschaftlichen Arbeitsmaschine, mit einer Mehrzahl von Anzeigeskalen an den zueinander benachbarten Anzeigeskalen jeweils ein Zeiger zum Visualisieren jeweils einer der Betriebsgrößen bewegbar ist und die Anzeigeskalen eingerichtet sind, relativ zueinander derart bewegt zu werden, dass ihre Zeiger, wenn sie Zielwerte der Betriebsgrößen visualisieren, auf einer gemeinsamen Linie liegen.

Jegliche Abweichung der Zeiger von der gemeinsamen Linie, nach oben oder nach unten, ist für die Bedienungsperson mit einem Blick als Abweichung vom Zielwert erkennbar, ohne dass sich die Bedienungsperson dafür die Zielwerte selber merken müsste. Daher kann die Bedienungsperson auch nach einer Zeitspanne relativer Unaufmerksamkeit sofort jegliche Abweichungen von einem Sollzustand erkennen und gegebenenfalls geeignete Maßnahmen zum Gegensteuern ergreifen.

Zweckmäßigerweise verfügt die Anzeigevorrichtung über eine Eingabevorrichtung, die es einem Benutzer ermöglicht, den Zielwert einer oder mehrerer der Betriebsgrößen festzulegen.

Die Eingabevorrichtung ist vorzugsweise eingerichtet, einen Istwert der wenigstens einen Betriebsgröße zum Zeitpunkt einer Betätigung der Eingabevorrichtung durch den Benutzer als Zielwert anzunehmen. Diese Art der Festlegung eines Zielwerts erspart dem Benutzer eine zeitraubende Eingabe eines zahlenmäßig spezifizierten Werts; außerdem kann eine Mehrzahl von Zielgrößen durch eine einzige Aktion des Benutzers festgelegt werden. Außerdem ist es im Hinblick auf die Optimierung des Betriebs der Maschine durchaus zweckmäßig, einmal erreichte und für brauchbar befundene Werte der Arbeitsparameter als Zielwerte festzulegen, denn eine Verschlechterung der Einstellungen ist durch Vergleich mit diesen Zielwerten - auch wenn sie nicht der absolut besten erreichbaren Einstellung entsprechen - leicht erkennbar, und wenn zu einem späteren Zeitpunkt eine den gespeicherten Zielwerten überlegene Einstellung der Maschine gefunden wird, so können die Parameterwerte dieser Einstellung als neue Zielwerte übernommen werden.

Es kann auch zweckmäßig sein, wenn die Anzeigevorrichtung eingerichtet ist, den Zielwert wenigstens einer der Betriebsgrößen anhand des wenigstens einen vom Benutzer festgelegten Zielwerts einer anderen Betriebsgröße festzulegen. Zu diesem Zweck können bekannte Zusammenhänge zwischen den Betriebsgrößen in der Anzeigevorrichtung einprogrammiert oder in anderer geeigneter Weise hinterlegt sein. Solcherart festgelegte Zielwerte können dem Benutzer vor Augen führen, welche Werte der Betriebsparameter er zu erreichen versuchen sollte, auch wenn er sie noch nicht erreicht hat.

In einer Zeitspanne vor der Festlegung des wenigstens einen Zielwerts durch den Benutzer sind die Anzeigeskalen auf der Anzeigevorrichtung vorzugsweise so platziert, dass ihre oberen Enden und ihre unteren Enden auf jeweils einer Linie liegen. So kann der Benutzer auf den ersten Blick erkennen, dass eine Festlegung des Zielwerts (oder der Zielwerte) noch aussteht.

Um der Bedienungsperson eine schnelle Beurteilung des relativen Ausmaßes einer Abweichung eines Betriebsparameters von seinem Zielwert zu ermöglichen, ist vorzugsweise jede Anzeigeskala in einem bezogen auf das normierte Werteintervall der dargestellten Betriebsgröße gleichen Maßstab dargestellt, d.h. wenn man z.B. den niedrigsten anzuzeigenden Wert einer Betriebsgröße als 0 und den höchsten als 100% ansetzt, ist der Maßstab dieses 0-100%-Intervalls bei allen Skalen gleich.

Wenn der Maßstab auf der gesamten Länge der dargestellten Anzeigeskala der gleiche ist, führt eine solche Normierung dazu, dass die Skalen alle gleich lang, aber quer zu der gemeinsamen Linie unterschiedlich weit gegeneinander versetzt sind. Um eine mit diesem Versatz zusammenhängende Einschränkung der Ablesbarkeit zu vermeiden, ist es zweckmäßig, dass der Maßstab der Skala in der Umgebung des Zielwerts größer festgelegt ist als in einem von dem Zielwert entfernten Wertebereich. Dies hat darüber hinaus den Vorteil, dass kleine Abweichungen des Ist-Wertes einer Betriebsgröße vom Zielwert in der Anzeige relativ groß und deutlich dargestellt werden, so dass die Bedienungsperson sie leicht und schnell erkennen und geeignet gegensteuern kann.

Eine Darstellung der Anzeigeskalen in Balkenform ist technisch, insbesondere in Form von Steuersoftware der Anzeigevorrichtung, einfach zu realisieren und für einen Benutzer leicht ablesbar.

Einer alternativen Ausgestaltung zufolge ist die Anzeigevorrichtung eingerichtet, eine Mehrzahl von kreisrunden Scheiben darzustellen, deren Umfang wenigstens zum Teil von einer der Anzeigeskalen eingenommen ist. Die oben beschriebene Variabilität des Darstellungsmaßstabes ergibt sich daraus, dass die lineare, auf die Oberfläche des Anzeigeschirms bezogene Entfernung des Zeigers einer Skala von der gemeinsamen Linie um so weniger variiert, der lokale Maßstab also um so kleiner wird, je näher der Zeiger einem oberen bzw. unteren Scheitelpunkt des kreisförmigen Objektes kommt. Da das menschliche Auge gewohnt ist, aus einer zweidimensionalen Darstellung auch Tiefeninformationen zu entnehmen, bekommt die Bedienungsperson trotz der perspektivischen Verkürzung der dargestellten Skala in größerer Entfernung von der gemeinsamen Linie einen korrekten quantitativen Eindruck vom Ist-Wert der Betriebsgröße bzw. von der Abweichung dieser Betriebsgröße von ihrem Zielwert.

Zum Platzieren der Zielwerte auf einer Linie beim Übergang vom ersten in den zweiten Anzeigemodus werden die kreisrunden Objekte zweckmäßiger Weise um ihre Achse gedreht. Der Platz, den die Objekte auf dem Anzeigeschirm belegen, ändert sich durch eine solche Drehung nicht. Daher können Zeichen oder Symbole, welche die jeweils angezeigten Betriebsgrößen identifizieren, in unmittelbarer Nachbarschaft der Objekte auf dem Anzeigeschirm platziert werden, was der Bedienungsperson die Zuordnung der Zeichen oder Symbole zu den angezeigten Skalen erleichtert.

Um einen Vergleich der relativen Abweichungen verschiedener Betriebsgrößen zu erleichtern, nimmt vorzugsweise jede Skala auf ihrem kreisrunden Objekt ein gleichgroßes Winkelintervall ein.

Um Platz auf dem Anzeigeschirm einzusparen, können die kreisrunden Objekte ohne wesentliche Einbuße an Ablesbarkeit teilweise überlappend angezeigt werden.

Besonders suggestiv und leicht ablesbar ist die Anzeige, wenn die kreisrunden Objekte zylindrische Scheiben sind und die Skalen an den Mantelflächen der Scheiben dargestellt werden.

Damit die Bedienungsperson einen Ist-Wert der angezeigten Betriebsgröße relativ zum Zielwert und zu der angezeigten Bereichsgrenze korrekt einschätzen kann, ist es vorteilhaft, wenn an der Skala ein Hilfszeiger zum Anzeigen wenigstens einer Grenze des Wertebereichs der Betriebsgröße vorhanden ist.

Vorteilhaft ist, wenn zusätzlich ein Soll-Bereich wenigstens einer der Betriebsgrößen, innerhalb dessen der Ist-Wert der betreffenden Betriebsgröße variieren darf, oder ein verbotener Bereich, den die Betriebsgröße nicht erreichen darf, durch Hilfszeiger angezeigt wird. So kann die Bedienungsperson schnell erkennen, ob eine eventuell vorhandene Abweichung zwischen Ist- und Zielwert einer Betriebsgröße eine Korrektur erfordert oder nicht. Zusätzlich kann auch der aktuelle Wert einer Betriebsgröße laufend darauf überprüft werden, ob sie außerhalb des Sollbereichs oder in einem verbotenen Bereich liegt. Zweckmäßigerweise ist dann die Anzeigevorrichtung eingerichtet, im Falle einer kritischen Abweichung des Istwerts wenigstens einer der Betriebsgrößen von ihrem Zielwert ein Symbol anzuzeigen, mit dem die Bedienungsperson aufgefordert wird, eine geeignete Abhilfemaßnahme zu treffen.

Wenn die Maschine, an der das Verfahren angewandt wird, ein Mähdrescher ist, kann der Satz von Betriebsgrößen zweckmäßigerweise mehrere der folgenden Größen umfassen:
- Erntegutdurchsatz der Maschine,
- Auslastung des Antriebs der Maschine,
- Erntegutverlust in einem oder mehreren Verarbeitungsaggregaten der Maschine;
- Überkehrmenge;
- Zusammensetzung des Überkehrstroms.

Erntegutverluste können in verschiedenen Aggregaten der Maschine auftreten. Es ist denkbar, einen über alle diese Aggregate aufsummierten Gesamterntegutverlust der Maschine zu erfassen und anzuzeigen, da dies die Größe ist, die für eine maximale Erntegutausbeute zu minimieren ist; es können aber auch die Verluste eines einzelnen Aggregats oder mehrerer Aggregate einzeln angezeigt werden, um eine gezielte Optimierung des Betriebs dieser Aggregate zu ermöglichen.

Die Aufgabe wird ferner gelöst durch ein Verfahren zum Betreiben einer Anzeigevorrichtung, insbesondere einer Anzeigevorrichtung wie oben beschrieben, mit den Schritten:
a) Visualisieren von Betriebsgrößen mit Hilfe von auf zueinander benachbarten Anzeigeskalen der Anzeigevorrichtung beweglichen Zeigern;
b) Festlegen von Zielwerten für mehrere der angezeigten Betriebsgrößen;
c) Bewegen der Anzeigeskalen an der Anzeigevorrichtung derart, dass die Zeiger der Anzeigeskalen, wenn sie die in Schritt b) festgelegten Zielwerte anzeigen, auf einer Linie liegen;
d) Visualisieren der Betriebsgrößen mit Hilfe der auf den in Schritt c) angeordneten Anzeigeskalen beweglichen Zeiger.

Die Visualisierung der Istwerte der Betriebsgrößen in Schritt a) liefert der Bedienungsperson einen schnellen Aufschluss über die Absolutbeträge der einzelnen Betriebsgrößen. Während dieses Schritts kann die Bedienungsperson Einstellungen der Maschine verändern, um die Betriebsgrößen auf wirtschaftlich günstige Werte zu bringen. Wenn dieses Ziel erreicht ist, kann die Bedienungsperson in Schritt b) die aktuellen Istwerte der Betriebsgrößen als Zielwerte festlegen, die im weiteren Betrieb nach Möglichkeit beibehalten werden sollen. Im Schritt c) werden dann die Anzeigeskalen so angeordnet, dass jede spätere Abweichung von den Zielwerten als Abweichung eines Zeigers von der gemeinsamen Linie schnell und deutlich sichtbar wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Mähdre- schers als Beispiel einer Maschine, an der das erfindungsgemäße Anzeigeverfahren ein- gesetzt wird;
- Fig. 2: ein Anzeigebild mit Ist-Werten mehrerer Be- triebsgrößen des Mähdreschers in einem ers- ten Anzeigemodus;
- Fig. 3: ein Anzeigebild, das dieselben Betriebsgrö- ßenwerte wie Fig. 2 in einem zweiten Anzei- gemodus darstellt;
- Fig. 4: ein Anzeigebild im zweiten Anzeigemodus ge- mäß einer zweiten Ausgestaltung der Erfin- dung;
- Fig. 5: ein Anzeigebild im ersten Anzeigemodus ge- mäß einer dritten Ausgestaltung der Erfin- dung;
- Fig. 6: ein Anzeigebild im zweiten Anzeigemodus ge- mäß der dritten Ausgestaltung; und
- Fig. 7: und 8 Anzeigebilder gemäß einer Weiterbil- dung der dritten Ausgestaltung.

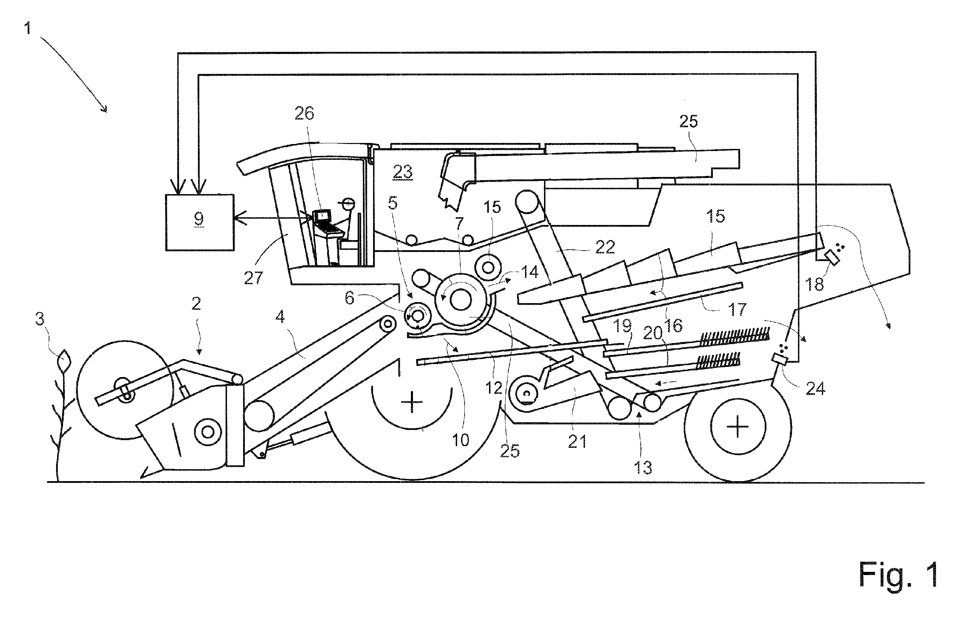

Fig. 1 ist eine schematische Darstellung eines Mähdreschers, an dem die vorliegende Erfindung verwirklicht ist. In an sich bekannter Weise umfasst der Mähdrescher 1 ein Schneidwerk 2, welches gewachsenes Erntegut 3 abschneidet und über ein Schrägförderorgan 4 einer Dreschstufe 5 zuführt.
Die Geschwindigkeit von Dreschtrommeln 6, 7, ihr Abstand von einem sie auf einem Teil ihres Umfangs umgebenden Dreschkorb 8 und/oder eine Lochweite des Dreschkorbs 8 stellen Betriebsgrößen des Mähdreschers dar, die ein Fahrer direkt oder unterstützt durch einen Bordcomputer 9 einstellen kann. Am Dreschkorb 8 wird aus dem Erntegut ein erster im Wesentlichen aus Körnern, Kurzstroh und Streu bestehender Gutstrom 10 abgeschieden, der über einen Vorbereitungsboden 12 in eine Reinigungseinrichtung 13 gelangt. Ein zweiter Gutstrom 14 wird von der Dreschstufe 5 an eine als Hordenschüttler 15 ausgeführte Trenneinrichtung übergeben. Schüttelfrequenz und/oder Amplitude des Hordenschüttlers 15 gehören ebenfalls zu den vom Fahrer beeinflussbaren Betriebsgrößen des Mähdreschers.

Ein auf dem Weg über den Hordenschüttler 15 abgeschiedener, im Wesentlichen aus Körnern, Stroh und Spreu bestehender Gutstrom 16 gelangt über einen Rücklaufboden 17 und den Vorbereitungsboden 12 ebenfalls zur Reinigungseinrichtung 13. Am hinteren Ende des Hordenschüttlers tritt ein im Wesentlichen aus Stroh bestehender Gutstrom aus dem Mähdrescher 1 aus. Ein Sensor 18 dient zur Erfassung eines restlichen Kornanteils, des sogenannten Kornverlusts, in diesem Gutstrom.

Die Reinigungseinrichtung 13 umfasst bewegte Siebe 19, 20 und ein Gebläse 21. Auch Eigenschaften der Siebbewegung wie Schüttelamplitude und -frequenz sowie der Durchsatz bzw. die Laufgeschwindigkeit des Gebläses 21 gehören zu den vom Fahrer steuerbaren Betriebsgrößen. In dem auf die Siebe 19, 20 gegebenen Gutstrom enthaltenes Korn fällt durch die Siebe 19, 20 hindurch und erreicht über einen Rücklaufboden einen Elevator 22, der das Korn in einen Korntank 23 befördert. Leichte Teilchen auf den Sieben 19, 20 werden vom Luftstrom des Gebläses 21 fortgerissen und am Heck des Mähdreschers ausgeworfen. Ein weiterer Sensor 24 dient zur Erfassung des Kornverlusts in diesem Gutstrom.

Schwere Teilchen, die die Siebe 19, 20 passiert haben, ohne hindurchzufallen, bilden einen sogenannten Überkehrstrom, der von einem Überkehrelevator 25 zurück in die Dreschstufe 5 gefördert wird.

Der Bordcomputer 9 ist mit einem Anzeigeschirm 26 in der Fahrerkabine 27 des Mähdreschers verbunden, um dem Fahrer erfasste Betriebsgrößen des Mähdreschers anzuzeigen bzw. vom Fahrer festgelegte Werte der Betriebsgrößen an den diversen Aggregaten des Mähdreschers einzustellen.

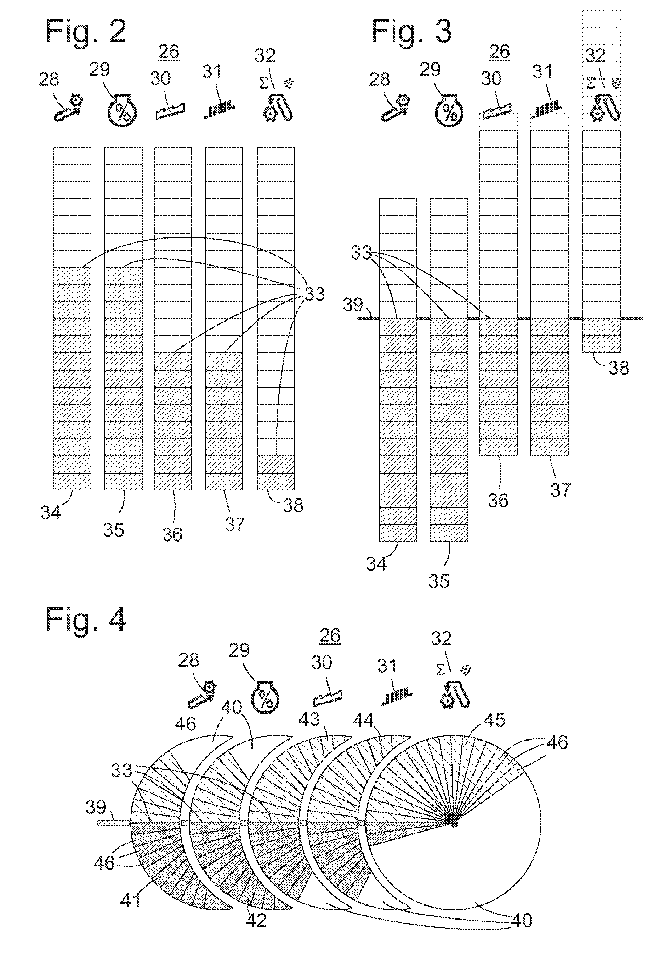

Fig. 2 zeigt einen Ausschnitt des Anzeigeschirms 26 gemäß einer ersten Ausgestaltung der Erfindung in einem ersten Betriebsmodus. Dargestellt sind im vorliegenden Fall fünf Betriebsgrößen, denen auf dem Anzeigeschirm 26 Symbole 28 - 32 und Skalen 34 - 38 zugeordnet sind. Die Symbole bezeichnen der Reihe nach den Erntegutdurchsatz auf einer Skala von 0 - 100%, wobei 100% dem maximalen Durchsatz entspricht, den der Mähdrescher 1 zu bewältigen im Stande ist, die Auslastung des Motors des Mähdreschers, ebenfalls auf einer Skala von 0 - 100%, den Kornverlust am Hordenschüttler bzw. in der Reinigungseinrichtung 13 sowie die Überkehrmenge, das heißt den Durchsatz des Überkehrelevators 25. Im Falle der Konverlustskalen 36, 37 bezeichnet das obere Ende der Skala zweckmäßigerweise nicht einen 100%igen Kornverlust, sondern 100% einer Kornverlustrate, die bei halbwegs praxisgerechten Einstellungen des Hordenschüttlers 15 bzw. der Reinigungseinrichtung 13 maximal zu erwarten ist. Ein Zeiger 33, der einen aktuellen Wert der jeweiligen Betriebsgrößen darstellt, ist hier jeweils durch eine Grenze zwischen unterschiedlich eingefärbten Bereichen der Skalen 34 - 38 gebildet.

Um Zielwerte für die angezeigten Betriebsgrößen festzulegen, sind unterschiedliche Ansätze denkbar. Einem einfachen Ansatz zufolge können beispielsweise zu einem gegebenen Zeitpunkt, insbesondere zum Zeitpunkt der Betätigung einer (nicht dargestellten) Auswahltaste durch den Benutzer, gemessene Ist-Werte aller dargestellten Betriebsgrößen als Zielwerte übernommen werden.

Nachdem die Zielwerte sämtlicher angezeigter Betriebsgrößen festgelegt worden sind, verschiebt der Bordcomputer 9 die angezeigten Skalen 34 - 38 auf dem Anzeigeschirm in der in Fig. 3 dargestellten Weise, so dass die Zeiger 33 an allen Skalen, wenn die angezeigten Ist-Werte der Betriebsgrößen mit den Zielwerten übereinstimmen, auf einer gemeinsamen Linie 39 liegen. Um für den Fahrer eindeutig erkennbar zu machen, in welchem der beiden Anzeigemodi sich der Anzeigschirm 26 befindet, wird die Linie 39 nur im Anzeigemodus der Fig. 3 angezeigt. Abweichungen der einzelnen Betriebsgrößen von den Zielwerten sind hier schnell und eindeutig durch eine Abweichung der Zeiger 33 von der Linie 39 erkennbar.

Im hier gezeigten Beispiel sind die Skalen 36 - 38 im zweiten Anzeigemodus nach oben verschoben, so dass sie, wenn sie vollständig angezeigt würden, mit den Symbolen 30 - 32 überlappen würden. Da es für die schnelle Ablesbarkeit des Anzeigebilds vorteilhaft ist, wenn die Symbole 28 - 32 in jedem Anzeigemodus an der gleichen Stelle erscheinen, wird eine Überlappung vermieden, indem die oberen Enden der Skalen 36 - 38 nicht dargestellt werden.

Der Anzeigemodus der Fig. 3 erleichtert dem Benutzer die Erkennung von Änderungen der Betriebsgrößen; d.h. er kann schnell und zuverlässig beurteilen, ob eine Einstellungsänderung, die er an einem beliebigen Aggregat des Mähdreschers vorgenommen hat, zu einer Änderung der Betriebsgrößen in der gewünschten Richtung geführt hat oder nicht. Wenn eine Verbesserung der Betriebsgrößen erreicht wurde, kann er die Betätigung der Auswahltaste wiederholen, um die aktuellen Istwerte zum Vergleichsmaßstab für eine weitere Optimierung der Einstellungen des Mähdreschers zu machen; wenn keine Verbesserung erreicht wurde, kann er die Änderung zurücknehmen.

Einer alternativen Ausgestaltung zufolge führt die Betätigung der Auswahltaste nur bei einem Teil der Betriebsgrößen dazu, dass die Istwerte als Zielwerte übernommen werden. Für die restlichen Betriebsgrößen berechnet der Bordcomputer 9 Zielwerte anhand bekannter Zusammenhänge zwischen den Betriebsgrößen und der per Auswahltaste festgelegten Zielwerte. Indem so für einige Betriebsgrößen das objektiv Erreichbare als Zielgröße vorgegeben wird, kann ein höheres Maß an Objektivität bei der Optimierung der Einstellungen erreicht werden, als wenn alle Zielwerte sich nur an bereits einmal Erreichtem orientieren.

Fig. 4 zeigt ein zu Fig. 3 analoges Anzeigebild gemäß einer zweiten Ausgestaltung der Erfindung. Auf dem Anzeigeschirm sind mehrere teilweise überlappende Kreisflächen 40 dargestellt, von denen jede örtlich einem der Symbole 28 - 32 zugeordnet ist. Auf jeder Kreisfläche ist eine kreissektorförmige Skala 41 - 45 dargestellt. Aufgrund der Überlappung der Kreisflächen 40 ist nur die äußerste rechte Skala 45 vollständig sichtbar. Wie in Fig. 3 ist ein Zustand dargestellt, in dem sämtliche Zeiger 33 auf einer gemeinsamen Linie 39 liegen, die durch die Mittelpunkte der Kreisflächen 40 verläuft.

Die Winkelausdehnung aller Skalen 41 - 45 ist gleich, und sie sind unterteilt in eine Vielzahl von kreissektorförmigen Segmenten 46, die je nach aktuellem Messwert der dargestellten Betriebsgröße zwei verschiedene Farben annehmen können. Im Falle des auf der Skala 41 angezeigten Durchsatzes der Maschine liegt der angezeigte Zielwert in der oberen Hälfte des möglichen Werteintervalls, so dass die Skala gegen eine Mittelstellung im Gegenuhrzeigersinn verdreht ist. Dunkle Segmente 46 füllen die untere Hälfte des sichtbaren Anzeigebereichs der Skala vollständig aus; am oberen Ende des Anzeigebereichs ist ein Teil der Kreisfläche 40 sichtbar, der nicht zur Skala gehört und die selbe Farbe aufweist wie der Hintergrund des Anzeigeschirms 26. Bei den auf den Skalen 43, 44 dargestellten Verlusten ist die Situation umgekehrt; die gemessenen Verlustraten liegen im unteren Bereich des möglichen Werteintervalls, so dass Segmente 46 in einer zweiten Farbe den sichtbaren Teil der Kreisfläche 40 oberhalb der Linie 39 komplett ausfüllen und ein nicht zur Skala gehöriger Teil unterhalb der Skala 43, 44 sichtbar ist.

Aufgrund der Überlappung der Kreisflächen 40 sind die sichtbaren Teile der Segmente 46 bei den Skalen 41 - 44 umso kleiner, je weiter diese von der Linie 39 entfernt sind. Wenn also, um vom Zielwert abweichende Messwerte auf diesen Skalen anzuzeigen, Segmente 46 oberhalb der Linie 39 in der ersten oder Segmente 46 unterhalb der Linie 39 in der zweiten Farbe dargestellt werden, ist der Farbwechsel eines der Linie 39 benachbarten Segmentes für den Fahrer wesentlich auffälliger als der eines weit von der Linie 39 entfernten und nur zu einem kleinen Teil sichtbaren Segmentes. Kleine Abweichungen vom Zielwert sind so deutlich erkennbar.

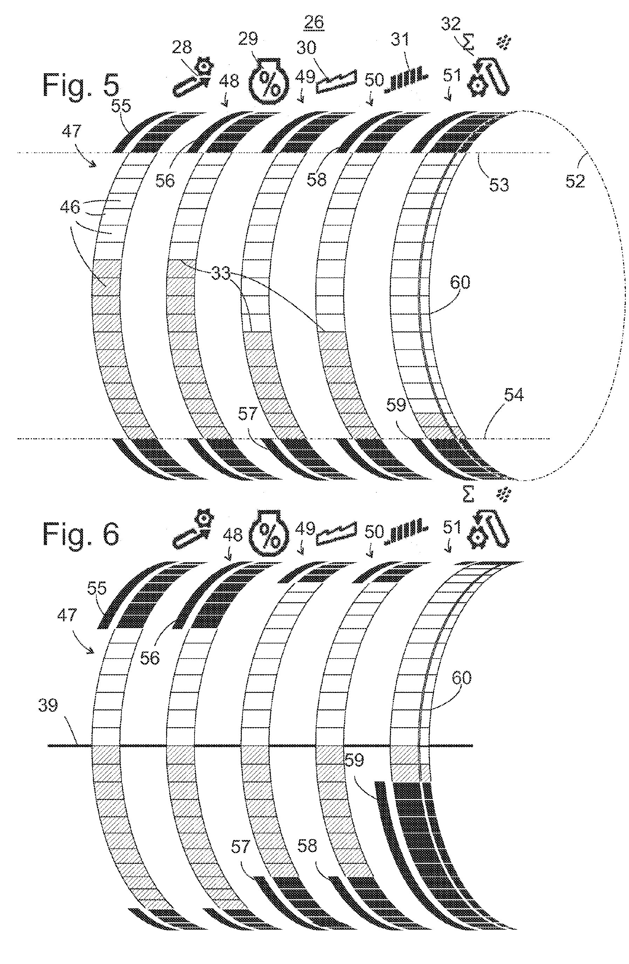

Eine Weiterentwicklung des in Fig. 4 dargestellten Anzeigekonzeptes wird anhand der Figuren 5 und 6 erläutert, die wiederum typische Anzeigebilder des Anzeigeschirms 26 im ersten bzw. zweiten Betriebsmodus zeigen. Die Skalen 47 - 51 sind hier dargestellt als perspektivische Ansichten der Mantelflächen von flachzylindrischen Scheiben 52, die in eine Vielzahl von - bezogen auf den Umfang der Scheiben - gleich breiten Segmenten 46 unterteilt sind. Der Deutlichkeit halber ist in Fig. 5 eine dieser Scheiben 52 als strichpunktierter Umriss vollständig gezeigt; in der Praxis erscheint nicht notwendigerweise ein vollständiger Umriss auf dem Anzeigeschirm 26. Im ersten Anzeigemodus der Fig. 5 erscheinen die Scheiben 52 so gedreht, dass die oberen und unteren Enden aller Skalen 47 - 51 auf jeweils einer gleichen horizontalen Linie 53 bzw. 54 liegen. Die in der Figur strichpunktiert eingezeichneten Linien 53, 54 sind auf dem Anzeigeschirm 26 in der Praxis nicht sichtbar.

Segmente 46, die zwischen den Linien 53, 54 liegen, können wie im Falle der Fig. 4 zwei verschiedene Farben annehmen, wobei eine Grenze zwischen unterschiedlich gefärbten Segmenten 46 als Zeiger 33 für den aktuellen Wert der auf der betreffenden Skala angezeigten Betriebsgröße dient. Segmente 46, die jenseits der Linien 53, 54 liegen und nicht zu den Skalen 47 - 51 gehören, sind durch eine dritte Farbe gekennzeichnet. Die Grenzen jeder Skala 47 - 51 ist hervorgehoben durch eine jeweils benachbarte Hilfsskala 55 - 59, deren Segmente außerhalb der Grenzen jeder Skala 47 - 51 in der dritten Farbe erscheinen und innerhalb der Grenzen mit dem Hintergrund des Anzeigeschirms 26 verschmelzen.

Fig. 6 zeigt wiederum den zweiten Anzeigebetriebsmodus, in welchem die Skalen 47 - 51 jeweils zusammen mit den ihnen zugeordneten Hilfsskalen 55 - 59 so gedreht sind, dass die Zeiger 33, wenn sie den Zielwert anzeigen, auf der Linie 39 liegen.

Der Skala 51 des Überkehrstroms ist in der Ausgestaltung der Figuren 5 und 6 eine zweite Hilfsskala 60 beigegeben, die den Kornanteil im Überkehrstrom angibt. Da dieser nicht unabhängig von der Stärke des Überkehrstroms beeinflussbar ist, ist ihm kein eigener Zielwert und keine eigene, unabhängig von den Skalen 47 - 51 verstellbare Anzeigeskala zugeordnet, sondern die Verschiebung der Hilfsskala 60 ist gekoppelt an die der Skala 51.

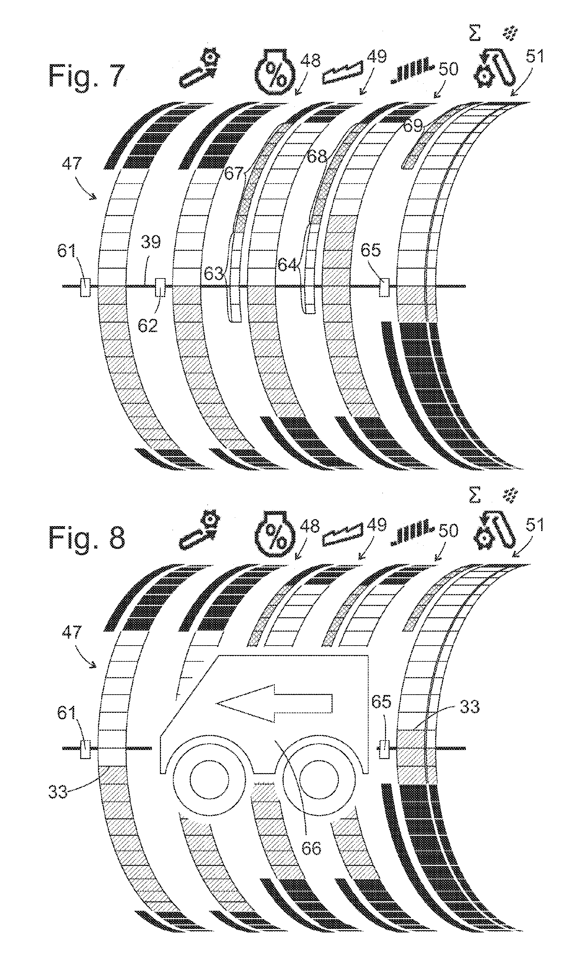

Fig. 7 zeigt eine Weiterentwicklung der in Bezug auf Fig. 5 und 6 beschriebenen Ausgestaltung im zweiten Anzeigemodus. Während die gemessenen Werte des Erntegutdurchsatzes, der Motorauslastung und des Schüttlerverlusts auf den Skalen 47 - 49 mit den Zielwerten übereinstimmen, zeigt die Skala 50 des Reinigungsverlusts eine signifikante Überschreitung des Zielwerts an. Die Hilfsskalen 55 - 59 haben bei dieser Weiterentwicklung nicht nur die Funktion, die Grenzen der Skalen 47 - 51 zu verdeutlichen, sondern sie zeigen darüber hinaus Sollbereiche 61 - 65 rings um die Zielwerte an, innerhalb derer die zugeordnete Betriebsgröße variieren darf, ohne dass Korrekturmaßnahmen erforderlich wären.

Falls eine der Betriebsgrößen ihren zugeordneten Sollbereich verlässt, wie in Fig. 8 beispielhaft für den Erntegutdurchsatz dargestellt, wo der Zeiger 33 unterhalb des Sollbereichs 61 liegt, wird im Anzeigefeld 26 ein Symbol 66 angezeigt, um dem Fahrer eine geeignete Gegenmaßnahme, hier ein Erhöhen der Fahrgeschwindigkeit, nahezulegen.

Im Falle der Hilfsskalen 57, 58, 59 sind in Fig. 7 und 8 nicht nur zulässige Wertebereiche 63 - 65 der betreffenden Betriebsgrößen dargestellt, sondern auch verbotene Bereiche 67 - 69. Wenn der aktuelle Wert der in den Skalen 49 - 51 zugeordneten Betriebsgrößen den jeweils zugeordneten verbotenen Bereich erreicht, kann der Bordcomputer 9, anstatt lediglich eine Gegenmaßnahme vorzuschlagen, diese selbsttätig ergreifen, oder er kann zusätzlich zur Darstellung eines eine Abhilfemaßnahme darstellenden Symbols 66 auf dem Anzeigeschirm 26 noch ein weiteres, z. B. akustisches, Warnsignal erzeugen, um dem Fahrer die Dringlichkeit der Abhilfemaßnahme zu verdeutlichen.

### Bezugszeichen

- 1: Mähdrescher
- 2: Schneidwerk
- 3: Erntegut
- 4: Schrägförderor- gan
- 5: Dreschstufe
- 6: Dreschtrommel
- 7: Dreschtrommel
- 8: Dreschkorb
- 9: Bordcomputer
- 10: Gutstrom
- 12: Vorbereitungs- boden
- 13: Reinigungsein- richtung
- 14: Gutstrom
- 15: Hordenschüttler
- 16: Gutstrom
- 17: Rücklaufboden
- 18: Sensor
- 19, 20: Sieb
- 21: Gebläse
- 22: Elevator
- 23: Korntank
- 24: Sensor
- 25: Überkehreleva- tor
- 26: Anzeigeschirm
- 27: Fahrerkabine
- 28-32: Symbol
- 33: Zeiger
- 34-38: Skala
- 39: Linie
- 40: Kreisfläche
- 41-45: Skala
- 46: Segment
- 47-51: Skala
- 52: Scheibe
- 53, 54: Linie
- 55-60: Hilfsskala
- 61-65: Bereich
- 66: Symbol
- 67-69: Bereich

## Patentansprüche

1. Anzeigevorrichtung zum Anzeigen von Betriebsgrößen einer Maschine, insbesondere einer landwirtschaftlichen Arbeitsmaschine, mit einer Mehrzahl von Anzeigeskalen (34-38; 41-45; 47-51), **dadurch gekennzeichnet, dass** an den zueinander benachbarten Anzeigeskalen (34-38; 41-45; 47-51) jeweils ein Zeiger (33) zum Visualisieren jeweils einer der Betriebsgrößen bewegbar ist und die Anzeigeskalen (34-38; 41-45; 47-51) eingerichtet sind, relativ zueinander derart bewegt zu werden, dass ihre Zeiger (33), wenn sie Zielwerte der Betriebsgrößen visualisieren, auf einer Linie (39) liegen.

2. Anzeigevorrichtung nach Anspruch 1, mit einer Eingabevorrichtung zum Festlegen des Zielwerts wenigstens einer der Betriebsgrößen durch einen Benutzer.

3. Anzeigevorrichtung nach Anspruch 2, **dadurch gekennzeichnet, dass** die Eingabevorrichtung eingerichtet ist, einen Istwert der wenigstens einen Betriebsgröße zum Zeitpunkt einer Betätigung der Eingabevorrichtung durch den Benutzer als Zielwert anzunehmen.

4. Anzeigevorrichtung nach Anspruch 3, **dadurch gekennzeichnet, dass** sie eingerichtet ist, den Zielwert wenigstens einer der Betriebsgrößen anhand des wenigstens einen vom Benutzer festgelegten Zielwerts einer anderen Betriebsgröße festzulegen.

5. Anzeigevorrichtung nach einem der Ansprüche 2 bis 4, **dadurch gekennzeichnet, dass** in einer Zeitspanne vor der Festlegung des wenigstens einen Zielwerts durch den Benutzer die Anzeigeskalen (34-38; 41-45; 47-51) so platziert sind, dass ihre oberen Enden und ihre unteren Enden auf jeweils einer Linie liegen.

6. Anzeigevorrichtung nach einem der vorhergehenden Ansprüche, **dadurch gekennzeichnet, dass** der Maßstab jeder Anzeigeskala (41-45; 47-51) in der Umgebung ihres Zielwerts größer festgelegt ist als in einem vom Zielwert entfernten Wertebereich.

7. Anzeigevorrichtung nach einem der vorhergehenden Ansprüche, **dadurch gekennzeichnet, dass** sie eingerichtet ist, die Anzeigeskalen in Balkenform darzustellen.

8. Anzeigevorrichtung nach einem der Ansprüche 1 bis 6, **dadurch gekennzeichnet, dass** sie eingerichtet ist, eine Mehrzahl von kreisrunden Scheiben darzustellen, deren Umfang wenigstens zum Teil von einer der Anzeigeskalen eingenommen ist.

9. Anzeigevorrichtung nach Anspruch 8, **dadurch gekennzeichnet, dass** zum Bewegen der Skalen gegeneinander die Scheiben um ihre Achse gedreht werden.

10. Anzeigevorrichtung nach Anspruch 8 oder 9, **dadurch gekennzeichnet, dass** die Scheiben (52) einander auf einem Anzeigeschirm (26) wenigstens teilweise überlappen.

11. Anzeigevorrichtung nach einem der vorhergehenden Ansprüche, **dadurch gekennzeichnet, dass** an wenigstens einer der Skalen (47-51) ein Hilfszeiger zum Anzeigen wenigstens einer Grenze des Werteintervalls der der Skala zugeordneten Betriebsgröße vorgesehen ist.

12. Anzeigevorrichtung nach einem der vorhergehenden Ansprüche, **gekennzeichnet durch** Hilfszeiger zum Anzeigen eines Sollbereichs (61-65) und/oder eines verbotenen Bereichs (67-69) wenigstens einer der Betriebsgrößen.

13. Anzeigevorrichtung nach einem der vorhergehenden Ansprüche, **dadurch gekennzeichnet, dass** sie eingerichtet ist, im Falle einer kritischen Abweichung des Istwerts wenigstens einer der Betriebsgrößen von ihrem Zielwert ein Symbol (65) einer möglichen Abhilfemaßnahme anzuzeigen.

14. Anzeigevorrichtung nach einem der vorhergehenden Ansprüche, **dadurch gekennzeichnet, dass** die Maschine ein Mähdrescher (1) ist und der Satz von Betriebsgrößen mehrere der folgenden Größen umfasst:
- Erntegutdurchsatz der Maschine,
- Leistung des Antriebs der Maschine,
- Erntegutverlust in einer oder mehreren Verarbeitungsaggregaten der Maschine;
- Überkehrmenge;
- Zusammensetzung des Überkehrstroms.

15. Verfahren zum Betreiben einer Anzeigevorrichtung, insbesondere einer Anzeigevorrichtung nach einem der vorhergehenden Ansprüche, mit den Schritten:
a) Visualisieren von Betriebsgrößen mit Hilfe von auf zueinander benachbarten Anzeigeskalen (34-38; 41-45; 47-51) der Anzeigevorrichtung beweglichen Zeigern (33);
b) Festlegen von Zielwerten für mehrere der angezeigten Betriebsgrößen;
c) Bewegen der Anzeigeskalen (34-38; 41-45; 47-51) an der Anzeigevorrichtung derart, dass die Zeiger (33) der Anzeigeskalen (34-38; 41-45; 47-51), wenn sie die in Schritt b) festgelegten Zielwerte anzeigen, auf einer Linie (39) liegen;
d) Visualisieren der Betriebsgrößen mit Hilfe der auf den in Schritt c) angeordneten Anzeigeskalen (34-38; 41-45; 47-51) beweglichen Zeiger (33).
